# EUROPEAN PATENT APPLICATION

(11) **EP 4 685 367 A1**
(43) Date of publication of application: **28.01.2026**
(21) Application number: 23927849.2
(22) Date of filing: 10.11.2023
(51) Int. Cl.: F16H 57/04

(54) **SPEED REDUCER**

(30) Priority: 22.03.2023 JP 2023045250
(71) Applicant: Jatco Ltd., Shizuoka 417-8585 (JP); Nissan Motor Co., Ltd., Kanagawa 221-0023 (JP)
(72) Inventor: OKUMURA, Yutaka, Fuji-shi, Shizuoka 417-0002 (JP); MOCHIZUKI, Yojiro, Fuji-shi, Shizuoka 417-0002 (JP); TANAKA, Yuuki, Fuji-shi, Shizuoka 417-0002 (JP)
(74) Representative: Hoefer & Partner Patentanwälte mbB
(86) International application number: PCT/JP2023/040595
(87) International publication number: WO 2024/195188

(57) **Abstract**

[PROBLEMS] To restrict a flow of oil even when a component is provided in a second case.

[SOLUTIONS] A speed reducer includes a first case; a second case attached to the first case; a power generation motor and a differential mechanism provided in the first case; an oil storage portion formed by the first case and the second case; and a component provided in the second case and above the power generation motor and the differential mechanism and positioned between the power generation motor and the differential mechanism in a horizontal direction orthogonal to a direction of a rotation shaft of the power generation motor, in which the first case has a protruding wall portion protruding from a matching surface to which the second case is attached, at a position overlapping the component as viewed from the direction of the rotation shaft of the power generation motor.

## Description

### TECHNICAL FIELD

The present invention relates to a speed reducer.

### BACKGROUND ART

A device disclosed in Patent Literature 1 has a structure in which oil scraped up by a differential device during driving of a drive motor is supplied to a holding portion that stores oil for lubricating a gear mechanism coupled to a power generation motor.

In the above device, each of one case (case body) and the other case (housing) constituting a gear case has a wall portion inside. Accordingly, the oil scraped up from the holding portion by the gear mechanism returns to the holding portion along the wall portion. Therefore, even when the drive motor is stopped, it is possible to prevent the oil stored in the holding portion from running out.

### PRIOR ART DOCUMENT

### PATENT DOCUMENT

Patent Document 1: WO2016/181713A

### SUMMARY OF INVENTION

### PROBLEM TO BE SOLVED BY THE INVENTION

In the above-described device (speed reducer), some component may be provided in the other case (second case) of the one case (first case) and the other case (second case). In this case, depending on a position where the component is provided, the wall portion cannot be provided in the other case (second case), and the flow of the oil scraped up by the gear mechanism cannot be restricted.

The present invention has been made in view of such a technical problem, and an object of the present invention is to allow the flow of the oil to be restricted even when a component is provided in the second case.

### MEANS FOR SOLVING THE PROBLEM

One aspect of the present invention provides a speed reducer, including: a first case; a second case attached to the first case; a power generation motor and a differential mechanism provided in the first case; an oil storage portion formed by the first case and the second case; and a component provided in the second case and above the power generation motor and the differential mechanism and positioned between the power generation motor and the differential mechanism in a horizontal direction orthogonal to a direction of a rotation shaft of the power generation motor, in which the first case has a protruding wall portion protruding from a matching surface to which the second case is attached, at a position overlapping the component as viewed from the direction of the rotation shaft of the power generation motor.

### EFFECT OF THE INVENTION

According to the above aspect, the protruding wall portion provided in the first case protrudes from the matching surface with the second case. Therefore, the oil scraped up and scattering during rotational driving of the power generation motor can be blocked by the protruding wall portion. Therefore, even when a component is provided in the second case, the flow of the scattering oil can be restricted. Accordingly, it is possible to prevent the oil from running out from the oil storage portion.

### BRIEF DESCRIPTION OF DRAWINGS

[FIG. 1] FIG. 1 is a schematic configuration diagram of a hybrid vehicle including a speed reducer according to an embodiment of the present invention.
[FIG. 2] FIG. 2 is a plan view of the speed reducer.
[FIG. 3] FIG. 3 is a left side view of the speed reducer.
[FIG. 4] FIG. 4 is a diagram for illustrating an internal configuration of the speed reducer.
[FIG. 5] FIG. 5 is a left side view of the first case.
[FIG. 6] FIG. 6 is a right side view of the second case.
[FIG. 7] FIG. 7 is a perspective view of a periphery of the protruding wall portion as viewed from an upper front side.
[FIG. 8] FIG. 8 is a perspective view of the periphery of the protruding wall portion as viewed from a lower rear side.
[FIG. 9] FIG. 9 is a diagram for illustrating a flow of oil when a fifth gear is rotating.
[FIG. 10] FIG. 10 is a diagram for illustrating a flow of oil when a first gear is rotating.

### DESCRIPTION OF EMBODIMENTS

Hereinafter, a speed reducer 100 according to an embodiment of the present invention will be described with reference to the accompanying drawings.

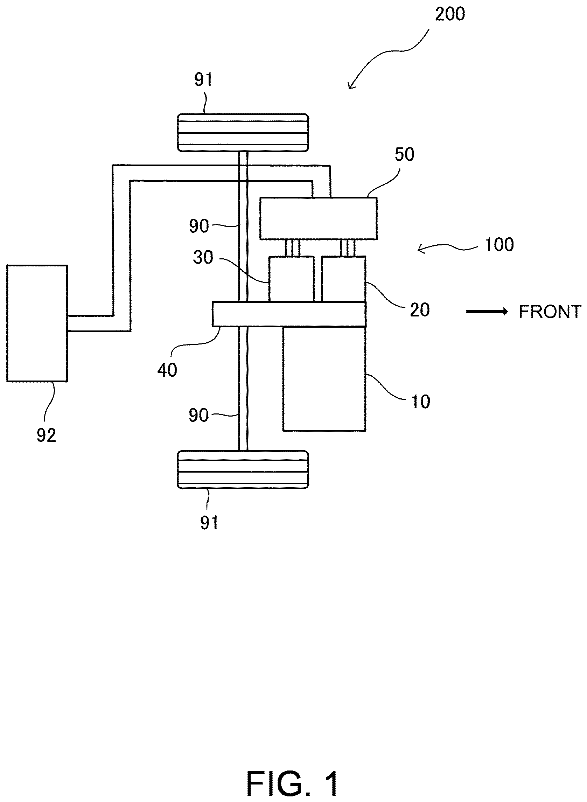

FIG. 1 is a schematic configuration diagram of a hybrid vehicle 200 including a speed reducer 100 according to the embodiment of the present invention. In the present embodiment, the hybrid vehicle 200 is a series hybrid type vehicle.

As illustrated in FIG. 1, the hybrid vehicle 200 includes an engine (internal combustion engine) 10, the speed reducer 100, an axle 90, drive wheels 91, a battery 92, and the like. The speed reducer 100 includes a power generation motor 20, a drive motor 30, a gear box 40, an inverter 50, and the like.

The hybrid vehicle 200 generates power by the power generation motor 20 using power of the engine 10, and stores the generated power in the battery 92. The hybrid vehicle 200 drives the drive wheels 91 by rotating the drive motor 30 with the power stored in the battery 92. Therefore, the power of the engine 10 is used to cause the power generation motor 20 to generate power, not to cause the hybrid vehicle 200 to travel.

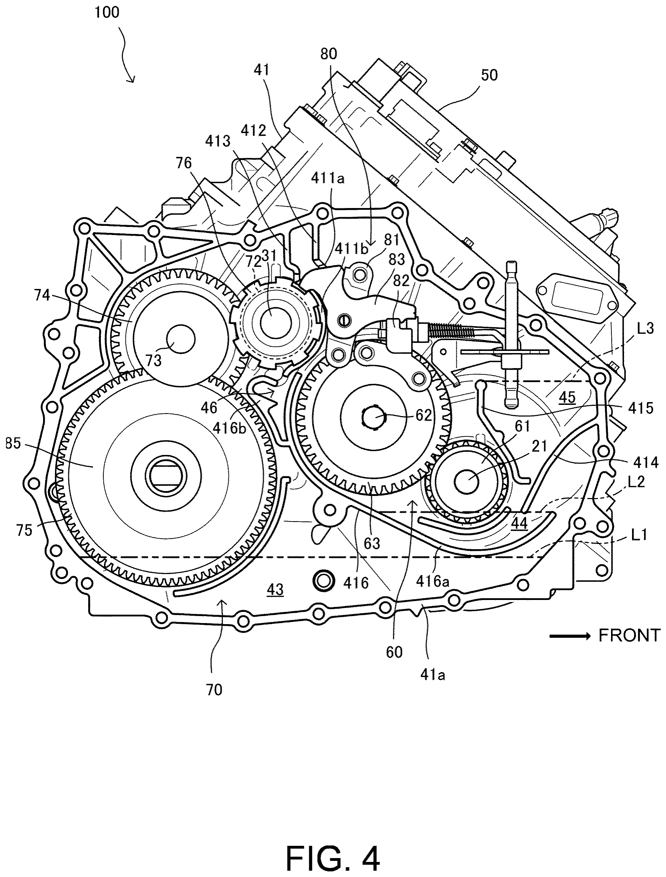

The engine 10 is coupled to the power generation motor 20 via a first gear train 60 (see FIG. 4), and transmits power for power generation of the power generation motor 20 to the power generation motor 20.

The power generation motor 20 generates power by being rotationally driven by the power transmitted from the engine 10. The power generation motor 20 is electrically connected to the inverter 50. The inverter 50 is also electrically connected to the drive motor 30 and the battery 92.

The battery 92 is charged with generated power by the power generation motor 20 via the inverter 50. The power charged in the battery 92 is supplied to the drive motor 30 via the inverter 50 and is used as power of the drive motor 30. The inverter 50 may be able to directly supply the generated power by the power generation motor 20 to the drive motor 30 without passing through the battery 92.

The drive motor 30 is electrically connected to the battery 92 via the inverter 50, and is mechanically coupled to the drive wheels 91 via a second gear train 70 (see FIG. 4), a differential mechanism 85 (see FIG. 4), and the axle 90.

The drive motor 30 is supplied with the power from the battery 92. The drive motor 30 is rotated by the power supplied from the battery 92 to generate a driving force. The driving force generated by this rotation is transmitted to the drive wheels 91 to drive the drive wheels 91. The drive wheels 91 may be front wheels or rear wheels, or may be both front wheels and rear wheels (that is, four-wheel drive). Note that in the present embodiment, as indicated by an arrow in FIG. 1, a right side in FIG. 1 is a vehicle front side (forward direction side).

The first gear train 60, the second gear train 70, the differential mechanism 85 and the like are accommodated in the gear box 40. Oil for lubricating is accommodated in the gear box 40.

The inverter 50 is electrically connected to the power generation motor 20, the drive motor 30, and the battery 92. The inverter 50 converts generated power by the power generation motor 20 into direct current power and supplies the direct current power to the battery 92, and converts the direct current power from the battery 92 into alternating current power and supplies the alternating current power to the drive motor 30.

The inverter 50 converts alternating current power regenerated by the drive motor 30 into direct current power and supplies the direct current power to the battery 92. When power is directly supplied from the power generation motor 20 to the drive motor 30, the inverter 50 adjusts a voltage and a frequency of the generated power by the power generation motor 20 and supplies the power to the drive motor 30.

The battery 92 is electrically connected to the power generation motor 20 and the drive motor 30 via the inverter 50. The generated power by the power generation motor 20 and the regenerative power of the drive motor 30 are charged in the battery 92, and the power charged in the battery 92 is supplied to the drive motor 30. The drive motor 30 is rotationally driven by power supplied from the battery 92, and the hybrid vehicle 200 travels by power of the drive motor 30.

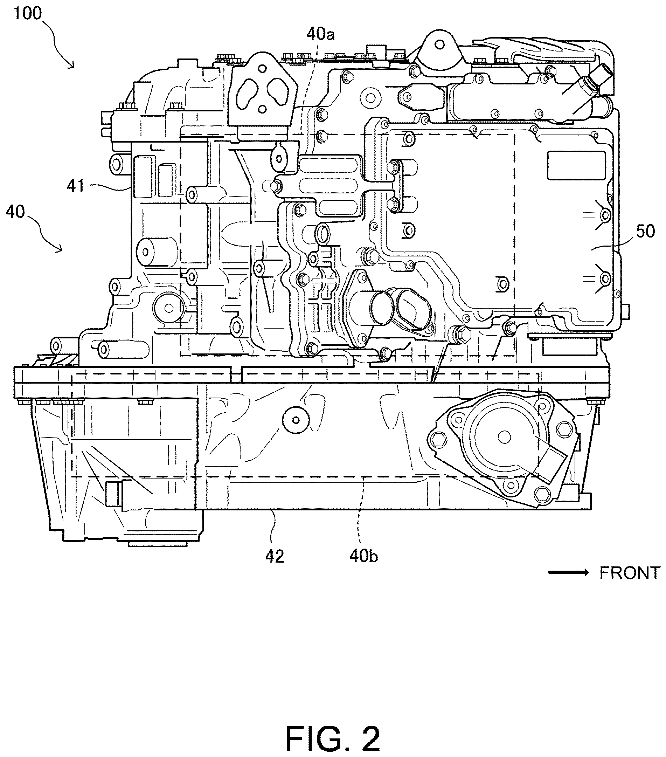

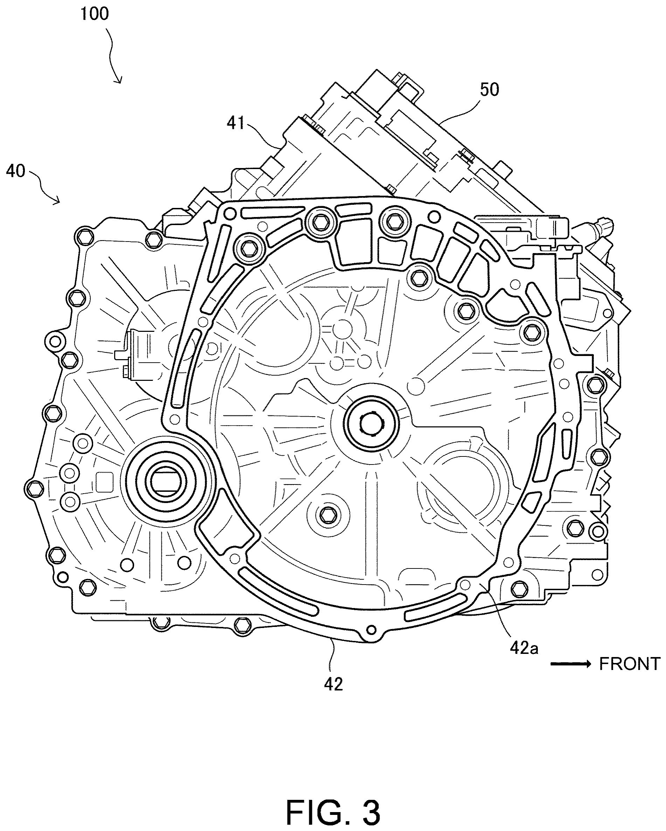

Next, the speed reducer 100 will be described with reference to FIGS. 2 to 4. FIG. 2 is a plan view of the speed reducer 100. FIG. 3 is a left side view of the speed reducer 100. FIG. 4 is a diagram for illustrating an internal configuration of the speed reducer 100. As indicated by arrows in FIGS. 2 to 4, the speed reducer 100 is mounted on the hybrid vehicle 200 such that a right side in FIG. 2 to 4 becomes the vehicle front side.

As described above, the speed reducer 100 includes the power generation motor 20, the drive motor 30, the gear box 40, the inverter 50, and the like.

As illustrated in FIGS. 2 and 3, the gear box 40 includes a first case 41 and a second case 42. The first case 41 and the second case 42 are formed by machining (cutting) a casting of an aluminum alloy.

The second case 42 is fixed to the first case 41 with a plurality of bolts. The engine 10 is attached to a matching surface 42a of the second case 42 illustrated in FIG. 3.

The inverter 50 is provided above the gear box 40.

The power generation motor 20, the drive motor 30, the first gear train 60, the second gear train 70, and the differential mechanism 85 are provided in the first case 41. The power generation motor 20 and the drive motor 30 are accommodated in a motor accommodating chamber 40a (see FIG. 2) formed inside the first case 41. The first gear train 60, the second gear train 70, the differential mechanism 85, the oil, and the like are accommodated in a gear accommodating chamber 40b (see FIG. 2) formed between the first case 41 and the second case 42. Note that the motor accommodating chamber 40a and the gear accommodating chamber 40b indicated by broken lines in FIG. 2 are schematically illustrated, and do not indicate actual shapes.

As illustrated in FIG. 4, the first gear train 60 includes a first gear 61 as a gear that rotates integrally with a rotation shaft 21 of the power generation motor 20, and a second gear 63 that rotates integrally with a rotation shaft 62 supported by the first case 41. A rotation shaft of the engine 10 is coupled to the second gear 63.

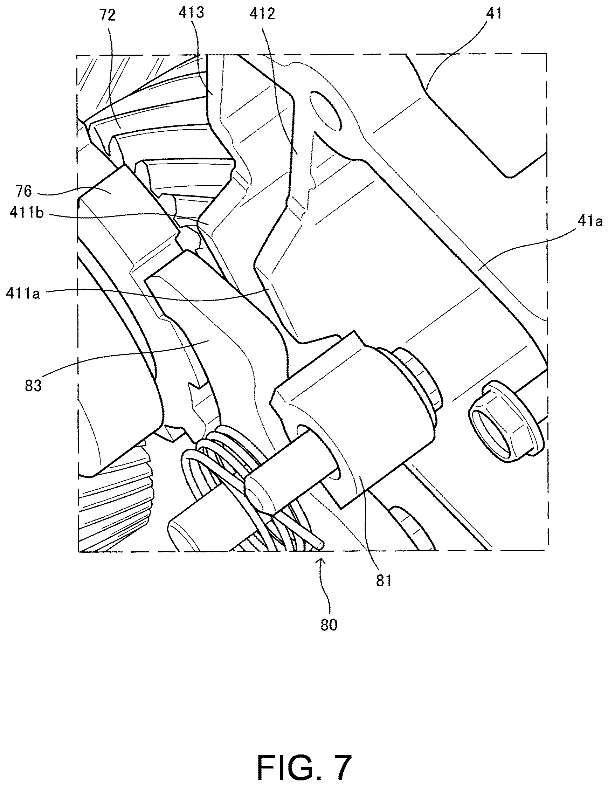

The second gear train 70 includes a third gear 72 (see FIG. 7) that rotates integrally with a rotation shaft 31 of the drive motor 30, a fourth gear 74 that rotates integrally with a rotation shaft 73 supported by the first case 41, and a fifth gear 75 fixed to the differential mechanism 85.

The speed reducer 100 is provided with a park mechanism 80 at a position illustrated in FIG. 4. The park mechanism 80 is provided in the second case 42 (not illustrated in FIG. 4) by fixing a first bracket 81 and a second bracket 82 with bolts.

The park mechanism 80 can switch between a locked state in which a lock claw 83 is locked to a park gear 76 that rotates integrally with the rotation shaft 31 and an unlocked state in which the lock claw 83 is not locked to the park gear 76. By setting the park mechanism 80 to the locked state, the hybrid vehicle 200 is set to a parking state.

A first oil bath 43 in which oil is stored is formed at a bottom of the gear accommodating chamber 40b (see oil level L1). The fifth gear 75 fixed to the differential mechanism 85 is disposed so as to be partially immersed in the oil stored in the first oil bath 43. The oil scraped up by rotation of the fifth gear 75 lubricates the third gear 72 and the fourth gear 74.

When the fifth gear 75 rotates clockwise in FIG. 4, the oil scraped up by the fifth gear 75 scatters toward the power generation motor 20 side. The oil scattering to the power generation motor 20 side is supplied to a second oil bath 44 (see oil level L2) and a third oil bath 45 (see oil level L3).

The oil gradually flows out from a bottom of the third oil bath 45. The oil flowing out of the third oil bath 45 flows into the second oil bath 44. That is, the third oil bath 45 is a reservoir for stabilizing an amount of oil in the second oil bath 44. Note that the third oil bath 45 may not be provided.

The first gear 61 is disposed so as to be partially immersed in the oil stored in the second oil bath 44 as an oil storage portion. The second gear 63 is lubricated by the oil scraped up by the rotation of the first gear 61.

The power generation motor 20 rotates counterclockwise in FIG. 4. Therefore, the oil scraped up by the first gear 61 scatters toward the differential mechanism 85 side.

Here, since the fifth gear 75 does not rotate in a state where the hybrid vehicle 200 is not traveling, the oil is not supplied to the second oil bath 44 and the third oil bath 45. Therefore, when the power generation motor 20 rotates in a state where the hybrid vehicle 200 is stopped, the oil in the second oil bath 44 decreases. As a result, the oil in the second oil bath 44 may be insufficient.

In response, for example, it is considered to restrict a flow of the oil scattering to the differential mechanism 85 side by providing a wall portion inside each of the first case 41 and the second case 42.

However, in the speed reducer 100 of the present embodiment, the park mechanism 80 is provided in the second case 42. In this way, when some component is provided in the second case 42, a wall portion cannot be provided at a position overlapping the component in the second case 42.

Therefore, in the present embodiment, a first protruding wall portion 411a and a second protruding wall portion 411b protruding from a matching surface 41a to which the second case 42 is attached are provided in the first case 41 at a position overlapping the lock claw 83 as viewed from a direction of the rotation shaft 21 of the power generation motor 20 (a position corresponding to the lock claw 83), so that the flow (scattering) of the oil scraped up by the first gear 61 to the differential mechanism 85 side can be restricted. Note that when the first protruding wall portion 411a and the second protruding wall portion 411b are not distinguished from each other, the first protruding wall portion 411a and the second protruding wall portion 411b are referred to as protruding wall portions 411.

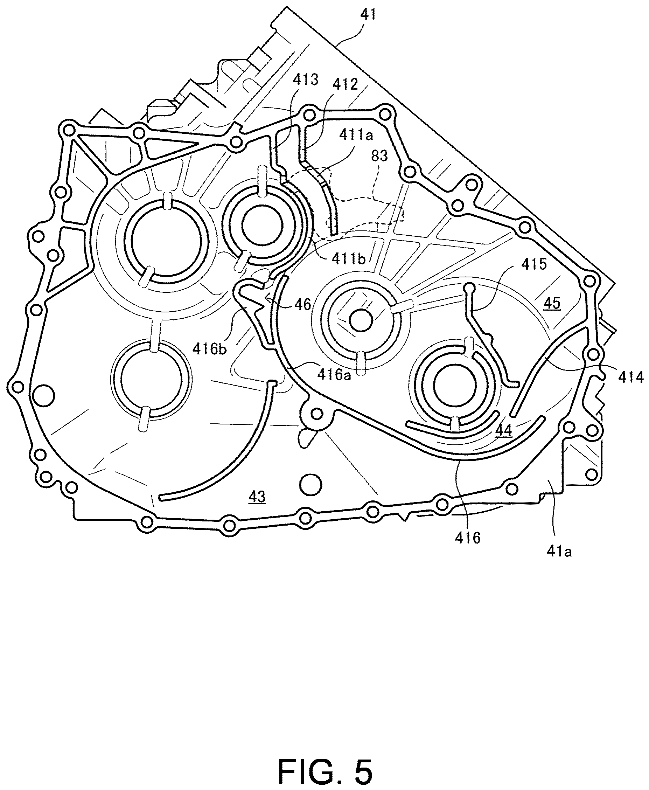

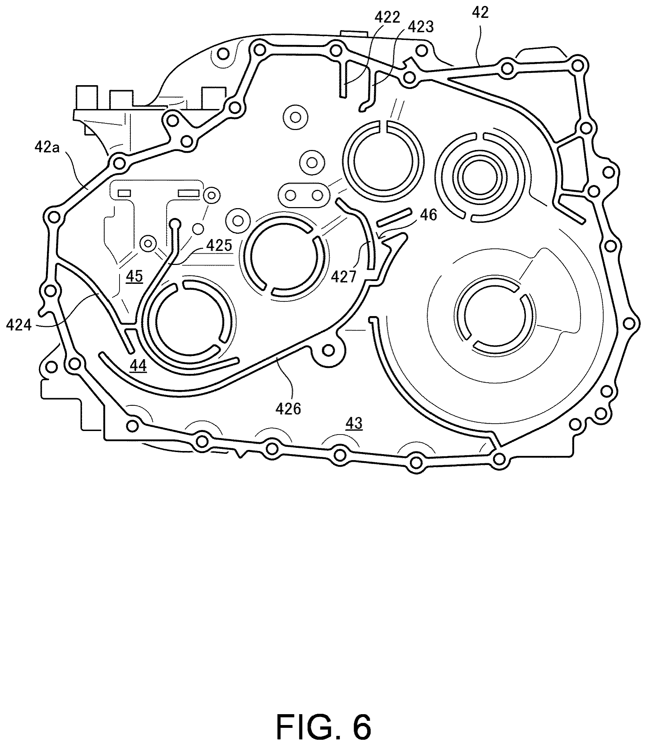

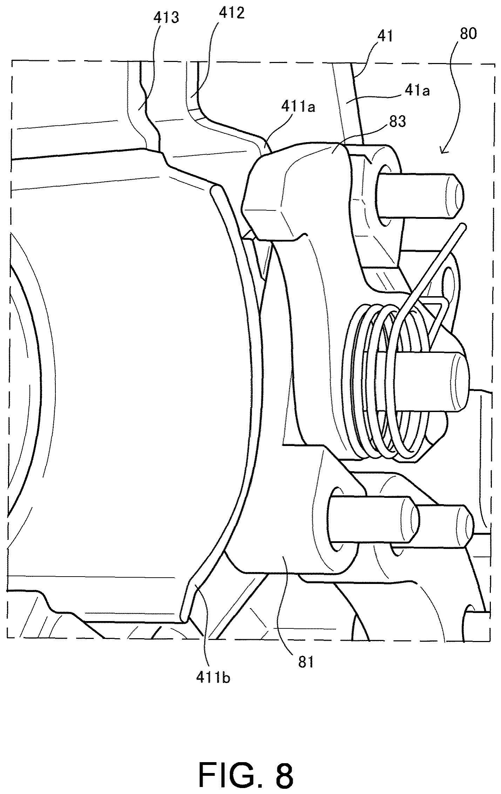

Hereinafter, the first case 41 and the second case 42 will be described with reference to FIGS. 4 to 8. FIG. 5 is a left side view of the first case 41. FIG. 6 is a right side view of the second case 42. FIG. 7 is a perspective view of a periphery of the protruding wall portion 411 as viewed from an upper front side. FIG. 8 is a perspective view of the periphery of the protruding wall portion 411 as viewed from a lower rear side. In FIG. 5, the lock claw 83 is indicated by a two-dot chain line. In FIGS. 7 and 8, some components are not illustrated for ease of understanding.

As illustrated in FIGS. 5, 7, and 8, the first protruding wall portion 411a protruding from the matching surface 41a in the direction of the rotation shaft 21 of the power generation motor 20 and the second protruding wall portion 411b protruding from the matching surface 41a in the direction of the rotation shaft 21 of the power generation motor 20 are provided side by side inside the first case 41.

As illustrated in FIG. 5, the first protruding wall portion 411a is provided at the position overlapping the lock claw 83. Note that when at least a part of the first protruding wall portion 411a overlaps the lock claw 83, it can be said that the first protruding wall portion 411a is at a position overlapping the lock claw 83. Similarly, the second protruding wall portion 411b is also provided at a position overlapping the lock claw 83.

The first protruding wall portion 411a is positioned closer to the power generation motor 20 side than the second protruding wall portion 411b. An upper end side of the first protruding wall portion 411a extends to a position higher than the second protruding wall portion 411b. "Higher" means higher in an upper-lower direction (gravity direction). A lower end side of the first protruding wall portion 411a extends obliquely downward toward the first gear 61 side to a vicinity of the first bracket 81 (see FIG. 8).

As illustrated in FIGS. 7 and 8, an end surface of the first protruding wall portion 411a on the lock claw 83 side and an end surface of the second protruding wall portion 411b on the lock claw 83 side are close to the lock claw 83.

As illustrated in FIG. 4, the second protruding wall portion 411b is positioned in front of the third gear 72 and is formed along the third gear 72.

As described above, in the present embodiment, the protruding wall portion 411 provided in the first case 41 protrudes from the matching surface 41a with the second case 42. Therefore, the oil scraped up and scattering during the rotational driving of the power generation motor 20 can be blocked by the protruding wall portion 411. Therefore, even when a component (the lock claw 83 in the present embodiment) is provided in the second case 42, the flow of the scattering oil can be restricted.

In the present embodiment, the first protruding wall portion 411a and the second protruding wall portion 411b are provided side by side. However, the number of the protruding wall portion 411 may be one. When the first protruding wall portion 411a and the second protruding wall portion 411b are provided side by side, the flow of oil that cannot be restricted by the first protruding wall portion 411a that is the first one of the protruding wall portions 411 can be restricted by the second protruding wall portion 411b that is the second one of the protruding wall portions 411. Especially, in the present embodiment, the two protruding wall portions 411 are provided side by side in the horizontal direction, and the two protruding wall portions 411 are positioned on a trajectory along which the oil scatters. Therefore, the oil that cannot be blocked by the first one of the protruding wall portions 411 can be more effectively blocked by the second one of the protruding wall portions 411. Note that the two protruding wall portions 411 may not be arranged horizontally. Such an effect can be obtained by providing the two protruding wall portions 411 side by side on the trajectory along which the oil scatters.

In the present embodiment, the first protruding wall portion 411a on the power generation motor 20 side extends to a position higher than the second protruding wall portion 411b on the differential mechanism 85 side. Therefore, the oil scraped up and scattering during the rotational driving of the power generation motor 20 can be more effectively blocked.

As illustrated in FIGS. 4 and 5, wall portions 412 to 416 are provided inside the first case 41. The wall portions 412 to 416 are formed to be flush with the matching surface 41a.

As illustrated in FIG. 4, the wall portion 412 is provided above the park mechanism 80. The wall portion 412 has one end connected to the matching surface 41a and the other end connected to the first protruding wall portion 411a.

The wall portion 413 is provided above the park mechanism 80. The wall portion 413 has one end connected to the matching surface 41a and the other end connected to the second protruding wall portion 411b.

The wall portion 414 is provided in front of the first gear 61. The wall portion 414 has one end connected to the matching surface 41a and a lower end extending obliquely downward so as to approach the first gear 61.

The wall portion 415 is provided above the first gear 61. The wall portion 415 extends obliquely downward such that a lower end thereof approaches the lower end of the wall portion 414.

The wall portion 416 is provided below the first gear 61 and the second gear 63. The wall portion 416 includes a main portion 416a and a branch portion 416b branched from the main portion 416a.

One end side of the main portion 416a extends to the vicinity of the second protruding wall portion 411b along the second gear 63. The other end side of the main portion 416a passes below the first gear 61 and extends to be in front of the lower end of the wall portion 414. The other end side of the main portion 416a is formed in an arc shape protruding downward below the first gear 61.

The branch portion 416b branches from the main portion 416a between the second gear 63 and the fifth gear 75 and extends obliquely upward along the fifth gear 75.

As illustrated in FIG. 6, wall portions 422 to 427 are provided inside the second case 42. Each of the wall portions 422 to 427 is formed to be flush with the matching surface 42a with the first case 41.

The wall portion 422 is formed corresponding to the position and shape of the wall portion 412 of the first case 41. One end of the wall portion 422 is connected to the matching surface 42a. When the second case 42 is attached to the first case 41, an end surface of the wall portion 412 and an end surface of the wall portion 422 abut against each other without a gap. The wall portion 412 and the wall portion 422 function as shielding walls that restrict the flow (scattering) of the oil scraped up by the first gear 61 toward the differential mechanism 85 side.

The wall portion 423 is formed corresponding to the position and shape of the wall portion 413 of the first case 41. One end of the wall portion 423 is connected to the matching surface 42a. When the second case 42 is attached to the first case 41, an end surface of the wall portion 413 and an end surface of the wall portion 423 abut against each other without a gap. The wall portion 413 and the wall portion 423 function as shielding walls that restrict the flow (scattering) of the oil scraped up by the first gear 61 toward the differential mechanism 85 side.

The wall portion 424 is formed corresponding to the position and shape of the wall portion 414 of the first case 41. One end of the wall portion 424 is connected to the matching surface 42a. The wall portion 425 is formed corresponding to the position and shape of the wall portion 415 of the first case 41. As illustrated in FIG. 5, the wall portion 414 and the wall portion 415 are separated, and as illustrated in FIG. 6, the wall portion 424 and the wall portion 425 are connected.

When the second case 42 is attached to the first case 41, an end surface of the wall portion 414 and an end surface of the wall portion 424 abut against each other without a gap, and an end surface of the wall portion 415 and an end surface of the wall portion 425 abut against each other without a gap. In this way, the third oil bath 45 is formed. The oil stored in the third oil bath 45 flows out from between the lower end of the wall portion 414 and the lower end of the wall portion 415.

The wall portion 426 and the wall portion 427 are formed corresponding to the position and shape of the wall portion 416 of the first case 41. Specifically, one end side of the wall portion 426 corresponds to the position and shape of the branch portion 416b, and the wall portion 427 corresponds to the position and shape of one end side of the main portion 416a. When the second case 42 is attached to the first case 41, an end surface of the wall portion 416 and an end surface of the wall portion 426 abut against each other without a gap. In this way, the second oil bath 44 is formed.

When the second case 42 is attached to the first case 41, an end surface on one end side of the main portion 416a and an end surface of the wall portion 427 abut against each other without a gap, and an end surface of the branch portion 416b and an end surface on one end side of the wall portion 426 abut against each other without a gap. In this way, an introduction oil passage 46 that guides the oil to the second oil bath 44 is formed.

As illustrated in FIGS. 4 and 5, an upper opening of the introduction oil passage 46 is open at a position into which the oil flowing down from a lower end of the second protruding wall portion 411b flows. Therefore, when the oil scattering by the rotation of the fifth gear 75 adheres to the second protruding wall portion 411b, the oil flows down to the introduction oil passage 46 along the second protruding wall portion 411b. Then, the oil flowing into the introduction oil passage 46 flows into the second oil bath 44 through a space between the wall portion 426 and the wall portion 427 (see FIG. 6).

Similarly, when the oil scattering by the rotation of the first gear 61 adheres to the second protruding wall portion 411b, the oil flows down to the introduction oil passage 46 along the second protruding wall portion 411b. Then, the oil flowing into the introduction oil passage 46 flows into the second oil bath 44 through a space between the wall portion 426 and the wall portion 427 (see FIG. 6).

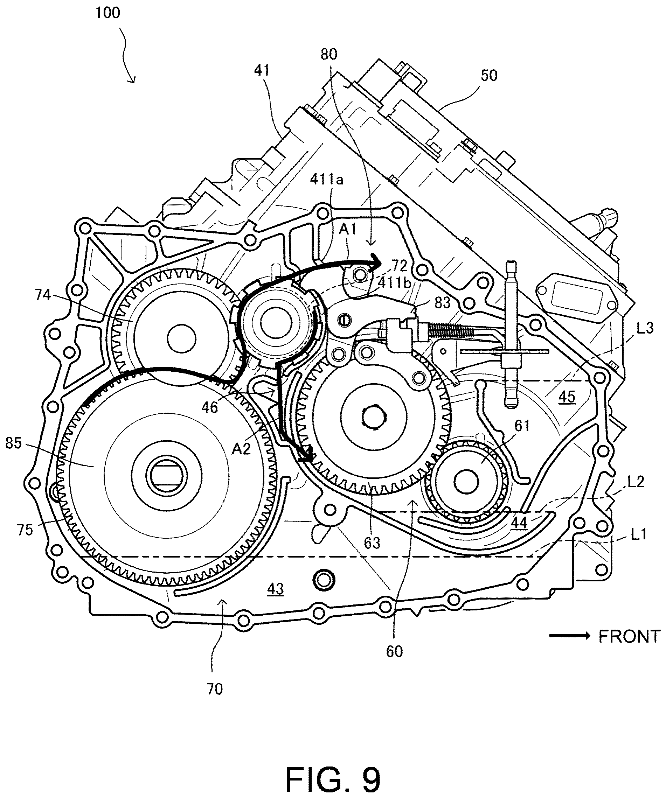

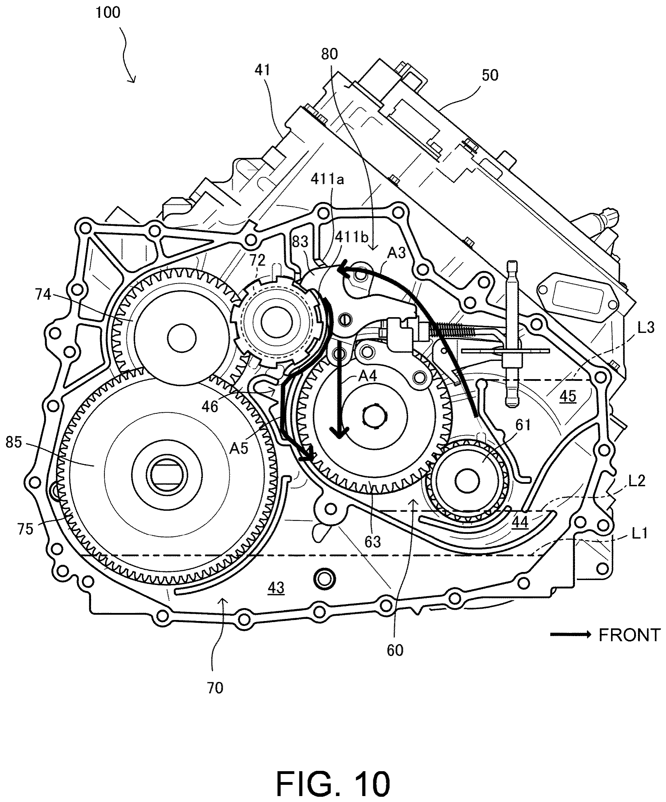

Next, the flow of oil in the gear accommodating chamber 40b will be described with reference to FIGS. 9 and 10. FIG. 9 is a diagram for illustrating a flow of oil when the fifth gear 75 is rotating. FIG. 10 is a diagram for illustrating a flow of oil when the first gear 61 is rotating. Note that here, a rotation direction of the fifth gear 75 is clockwise. As described above, the rotation direction of the first gear 61 (the power generation motor 20) is counterclockwise.

As indicated by an arrow A1 in FIG. 9, when the fifth gear 75 rotates clockwise, the oil scraped up by the fifth gear 75 moves along the fourth gear 74 and the third gear 72. Then, the oil scattering from the third gear 72 to the power generation motor 20 side passes through gaps around the protruding wall portion 411 (the first protruding wall portion 411a and the second protruding wall portion 411b) and the park mechanism 80 and falls. In this way, the oil is supplied to the second oil bath 44 and the third oil bath 45.

As indicated by an arrow A2, the oil adhering to the second protruding wall portion 411b flows down to the introduction oil passage 46 along the second protruding wall portion 411b. Then, the oil flowing into the introduction oil passage 46 is supplied to the second oil bath 44 through a space between the wall portion 426 and the wall portion 427 (see FIG. 6).

As indicated by an arrow A3 in FIG. 10, when the first gear 61 rotates, the oil scraped up by the first gear 61 scatters. In the present embodiment, as described above, since the protruding wall portion 411 protruding from the matching surface 41a is provided in the first case 41, most of the oil scraped up by the first gear 61 is blocked by the protruding wall portion 411. Then, as indicated by an arrow A4, the oil falls from the protruding wall portion 411 and returns to the second oil bath 44.

A part of the scattering oil adheres to the second protruding wall portion 411b. The oil adhering to the second protruding wall portion 411b falls as indicated by the arrow A4 or flows down to the introduction oil passage 46 along the second protruding wall portion 411b as indicated by an arrow A5. Then, the oil flowing into the introduction oil passage 46 returns to the second oil bath 44 through the space between the wall portion 426 and the wall portion 427 (see FIG. 6).

Note that even when the lock claw 83 and the protruding wall portion 411 are at positions different from those in the present embodiment, it is possible to obtain the effect of restricting the flow (scattering) of the oil scraped up by the first gear 61 toward the differential mechanism 85 side. Specifically, the positions of the lock claw 83 and the protruding wall portion 411 may be at any positions that can block the path through which the oil scraped up by the first gear 61 scatters toward the differential mechanism 85 side. That is, it can be said that as long as the lock claw 83 and the protruding wall portion 411 are positioned above the power generation motor 20 and the differential mechanism 85 and between the power generation motor 20 and the differential mechanism 85 in the horizontal direction orthogonal to the direction of the rotation shaft 21 of the power generation motor 20, the flow (scattering) of the oil scraped up by the first gear 61 to the differential mechanism 85 side can be restricted.

Hereinafter, main effects of the speed reducer 100 according to the embodiment of the present invention will be collectively described.
(1) The speed reducer 100 includes: the first case 41; the second case 42 attached to the first case 41; the power generation motor 20 and the differential mechanism 85 provided in the first case 41; the second oil bath 44 formed by the first case 41 and the second case 42; and the component (lock claw 83) provided in the second case 42 and above the power generation motor 20 and the differential mechanism 85 and positioned between the power generation motor 20 and the differential mechanism 85 in the horizontal direction orthogonal to the direction of the rotation shaft 21 of the power generation motor 20, in which the first case 41 has the protruding wall portion 411 (first protruding wall portion 411a, second protruding wall portion 411b) protruding from the matching surface 41a to which the second case 42 is attached, at a position overlapping the component (lock claw 83) as viewed from the direction of the rotation shaft 21 of the power generation motor 20.

Accordingly, the protruding wall portion 411 (the first protruding wall portion 411a and the second protruding wall portion 411b) provided in the first case 41 protrudes from the matching surface 41a with the second case 42. Therefore, the oil scraped up and scattering during the rotational driving of the power generation motor 20 can be blocked by the protruding wall portion 411 (the first protruding wall portion 411a and the second protruding wall portion 411b). Therefore, even when a component (lock claw 83) is provided in the second case 42, the flow of the scattering oil can be restricted. Accordingly, it is possible to prevent the oil from running out from the second oil bath 44.

(2) The first case 41 has two of the protruding wall portions 411, and the two protruding wall portions 411 (the first protruding wall portion 411a and the second protruding wall portion 411b) are provided side by side.

Accordingly, the flow of oil that cannot be restricted by the first protruding wall portion 411a that is the first one of the protruding wall portions 411 can be restricted by the second protruding wall portion 411b that is the second one of the protruding wall portions 411.

(3) Of the two protruding wall portions 411 (the first protruding wall portion 411a and the second protruding wall portion 411b), the protruding wall portion 411 (the first protruding wall portion 411a) on the power generation motor 20 side extends to a position higher than the protruding wall portion 411 (the second protruding wall portion 411b) on the differential mechanism 85 side.

Accordingly, the oil scraped up and scattering during the rotational driving of the power generation motor 20 can be more effectively blocked.

(4) The speed reducer 100 includes: the first case 41; the second case 42 attached to the first case 41; the power generation motor 20 and the differential mechanism 85 provided in the first case 41; the second oil bath 44 formed by the first case 41 and the second case 42; the first gear 61 at least partially immersed in oil in the second oil bath 44 and rotated by the rotation shaft 21 of the power generation motor 20; and the component (lock claw 83) provided in the second case 42 and above the power generation motor 20 and the differential mechanism 85 and positioned between the power generation motor 20 and the differential mechanism 85 in the horizontal direction orthogonal to the direction of the rotation shaft 21 of the power generation motor 20, in which the first case 41 has the protruding wall portion 411 (first protruding wall portion 41 1a, second protruding wall portion 41 1b) protruding from the matching surface 41a to which the second case 42 is attached, at a position overlapping the component (lock claw 83) as viewed from the direction of the rotation shaft 21 of the power generation motor 20.

Accordingly, the protruding wall portion 411 (the first protruding wall portion 411a and the second protruding wall portion 411b) provided in the first case 41 protrudes from the matching surface 41a with the second case 42. Therefore, the oil scraped up and scattering by the first gear 61 during the rotational driving of the power generation motor 20 can be blocked by the protruding wall portion 411 (the first protruding wall portion 411a and the second protruding wall portion 411b). Therefore, even when a component (lock claw 83) is provided in the second case 42, the flow of the scattering oil can be restricted. Accordingly, it is possible to prevent the oil from running out from the second oil bath 44.

Although the embodiment of the present invention has been described above, the above embodiment is merely a part of application examples of the present invention, and is not intended to limit the technical scope of the present invention to the specific configurations of the above embodiment.

For example, in the above embodiment, a case has been described in which the component provided in the second case 42 and above the power generation motor 20 and the differential mechanism 85 and positioned between the power generation motor 20 and the differential mechanism 85 in the horizontal direction orthogonal to the direction of the rotation shaft 21 of the power generation motor 20 is the lock claw 83. However, the component is not limited to the lock claw 83. For example, it may be another component of the park mechanism 80, or may be a gear or the like provided in the second case 42. The components may be provided directly or indirectly in the second case 42. The component may be a movable component or a fixed component. The lock claw 83 is a movable component.

In the above embodiment, a case where the gear rotated by the power generation motor 20 is the first gear 61 that rotates integrally with the rotation shaft 21 of the power generation motor 20 has been described. However, the gear rotated by the power generation motor 20 is not limited to the gear rotated integrally with the power generation motor 20, and may be, for example, a gear rotated via another gear.

### DESCRIPTION OF REFERENCE SIGNS

- 100: SPEED REDUCER
- 20: POWER GENERATION MOTOR
- 21: ROTATION SHAFT
- 41: FIRST CASE
- 41a: MATCHING SURFACE
- 42: SECOND CASE
- 44: SECOND OIL BATH (OIL STORAGE PORTION)
- 61: FIRST GEAR (GEAR)
- 83: LOCK CLAW (COMPONENT)
- 85: DIFFERENTIAL MECHANISM
- 411a: FIRST PROTRUDING WALL PORTION (PROTRUDING WALL PORTION)
- 411b: SECOND PROTRUDING WALL PORTION (PROTRUDING WALL PORTION)

## Claims

1. A speed reducer, comprising:
a first case;
a second case attached to the first case;
a power generation motor and a differential mechanism provided in the first case;
an oil storage portion formed by the first case and the second case; and a component provided in the second case and above the power generation motor and the differential mechanism and positioned between the power generation motor and the differential mechanism in a horizontal direction orthogonal to a direction of a rotation shaft of the power generation motor, wherein
the first case has a protruding wall portion protruding from a matching surface to which the second case is attached, at a position overlapping the component as viewed from the direction of the rotation shaft of the power generation motor.

2. The speed reducer according to claim 1, wherein
the first case has two of the protruding wall portions, and
the two protruding wall portions are provided side by side.

3. The speed reducer according to claim 2, wherein
of the two protruding wall portions, the protruding wall portion on the power generation motor side extends to a position higher than the protruding wall portion on the differential mechanism side.

4. A speed reducer, comprising:
a first case;
a second case attached to the first case;
a power generation motor and a differential mechanism provided in the first case;
an oil storage portion formed by the first case and the second case;
a gear at least partially immersed in oil in the oil storage portion and rotated by a rotation shaft of the power generation motor; and
a component provided in the second case and above the power generation motor and the differential mechanism and positioned between the power generation motor and the differential mechanism in a horizontal direction orthogonal to a direction of the rotation shaft of the power generation motor, wherein
the first case has a protruding wall portion protruding from a matching surface to which the second case is attached, at a position overlapping the component as viewed from the direction of the rotation shaft of the power generation motor.
